# EUROPÄISCHE PATENTSCHRIFT

(11) **EP 4 189 183 B1**
(45) Veröffentlichungstag und Bekanntmachung des Hinweises auf die Patenterteilung: **16.04.2025**
(21) Anmeldenummer: 21749195.0
(22) Anmeldetag: 26.07.2021
(51) Int. Cl.: E03C 1/04

(54) **WASSERFÜHRENDE ANORDNUNG**
WATER-CONDUCTING ARRANGEMENT
AGENCEMENT DE CONDUITE D'EAU

(30) Priorität: 29.07.2020 DE 202020104394 U; 18.09.2020 DE 202020105356 U
(43) Veröffentlichungstag der Anmeldung: 07.06.2023
(73) Patentinhaber: Neoperl GmbH, 79379 Müllheim (DE)
(72) Erfinder: KURY, Werner, 79379 Müllheim (DE)
(74) Vertreter: Mertzlufft-Paufler, Cornelius
(86) Internationale Anmeldenummer: PCT/EP2021/070856
(87) Internationale Veröffentlichungsnummer: WO 2022/023265

(56) Entgegenhaltungen:
- EP-A1- 2 592 270
- CA-A1- 3 013 133
- CH-A5- 657 403
- FR-A- 1 146 949

## Beschreibung

Die Erfindung betrifft eine zur Wasserführung geeignete Anordnung, die im Folgenden auch als wasserführende Anordnung bezeichnet wird, mit einer Funktionseinheit und mindestens einem Verbindungsschlauch.

Derartige wasserführende Anordnungen sind bekannt und werden beispielsweise in Sanitärarmaturen eingesetzt. Die Verbindungsschläuche dienen oft dazu, die Funktion einer Wasserführung zu einer Funktionseinheit, beispielsweise einem Ventil oder einem Wasserauslass, von der Funktion einer mechanischen Halterung der Funktionseinheit an der Sanitärarmatur zu trennen. Dies hat oft zur Folge, dass eine fluidische Verbindung des Verbindungsschlauchs mit der Funktionseinheit in Gebrauchsstellung in der Sanitärarmatur verborgen angeordnet ist.

Aus der EP 2 592 270 A1 ist ein Pumpenschlauch für eine peristaltische Pumpe zum Einlegen in ein peristaltisches Pumpensegment mit einem schlauchförmigen Mittelteil, beidseitig angeordneten Anschlussteilen zum Anschluss des Pumpenschlauches an weitere Elemente, beidseitig angeordneten Flanschteilen zum Einlegen in einen Kassettenteil der peristaltischen Pumpe vorbekannt. Der Pumpenschlauch ist dadurch gekennzeichnet, dass der schlauchförmige Mittelteil, die beidseitig angeordneten Anschlussteile und die beidseitig angeordneten Flanschteile einstückig aus Silikon hergestellt sind, die Anschlussteile jeweils kopfartig eine Dichtfläche aufweisen, wobei die Dichtfläche mit einer im Wesentlichen kreisförmigen Dichtwulst umgeben ist, die longitudinal über die Dichtfläche herausragt.

Aus der CH 657 403 A5 ist eine Auslaufvorrichtung an einer Sanitärarmatur für Kalt- und Warmwasser mit innerhalb eines kaltwasserführenden Auslaufrohres bis zur Mündung getrennt geführtem Warmwasserkanal vorbekannt. Die Auslaufvorrichtung ist dadurch gekennzeichnet, dass das kaltwasserführende Auslaufrohr ein Innengewinde aufweisendes Mundstück besitzt, in welches ein Strahlbrechereinsatz eingeschraubt ist, dessen über das Mundstück vorstehende Partie durch eine Innenhülse und eine Aussenhülse eine radial äußere Ringmündung für Kaltwasser und eine koaxiale innere Rohrmündung für Warmwasser bildet, wobei die innere der Hülsen dicht gegen ein Kupplungsrohrstück anliegt, das seinerseits am auslaufseitigen Ende des Warmwasserkanals befestigt ist.

Die Druckschrift FR 1 146 949 A offenbart ein Verfahren zum Verbinden von Rohren aus Kunststoffmaterialien sowie die so erhaltenen Kupplungen, die insbesondere für Rohre verwendet werden können, die Temperaturen standhalten sollen, die hoch genug sind, um eine Erweichung des Materials zu bewirken. woraus sie bestehen.

Die Druckschrift CA 3 013 133 A1 offenbart unterschiedliche Wasserhähne, nämlich insbesondere einen ausziehbaren Wasserhahn und einen herunterziehbaren Wasserhahn.

Der Erfindung liegt die Aufgabe zugrunde, eine einfach herstellbare fluidische Verbindung bei einer wasserführenden Anordnung zu schaffen.

Zur Lösung der genannten Aufgabe sind erfindungsgemäß die Merkmale des Anspruchs 1 vorgesehen. Insbesondere wird somit bei einer wasserführenden Anordnung der eingangs genannten Art erfindungsgemäß vorgeschlagen, dass an einem der Funktionseinheit zugewandten Ende des Verbindungsschlauchs eine angeformte Haltekrempe einstückig ausgebildet ist und dass die Haltekrempe an einer Schlauchaufnahme der Funktionseinheit, insbesondere eines Ventils, eingehängt ist. Somit ist ein Schlauchnippel an dem Verbindungsschlauch verzichtbar. Dies vereinfacht die Herstellung der fluidischen Verbindung. Wenn kein Schlauchnippel mehr nötig ist, kann ein lichter Innenquerschnitt bei gleichbleibender Außenabmessung größer gewählt werden. Dies ist günstig für einen möglichst niedrigen Strömungswiderstand.

Beispielsweise kann die Funktionseinheit ein Ventil oder ein Wasserauslass sein. Die Erfindung ist somit vorteilhaft bei Funktionseinheiten einsetzbar, die in beengten Platzverhältnissen angeordnet sind.

Beispielsweise kann der Verbindungsschlauch ein Zulaufschlauch sein. Die Erfindung ist somit auch bei Verbindungsschläuchen mit einem vergleichsweise hohen Betriebsdruck einsetzbar. Hier kann beispielsweise vorgesehen sein, dass der Verbindungsschlauch ein Kaltwasserschlauch ist. Dies kann eine Langzeitstabilität der fluidischen Verbindung positiv beeinflussen.

Beispielsweise kann der Verbindungsschlauch auch ein Ablaufschlauch sein. Die Erfindung macht sich hier zunutze, dass ein Betriebsdruck an der Ablaufseite einer Funktionseinheit wegen des Druckabfalls über der Funktionseinheit häufig deutlich geringer ist als auf der Zulaufseite.

Bei einer Ausgestaltung der Erfindung kann vorgesehen sein, dass der Verbindungsschlauch aus einem thermoplastischen Material gefertigt ist. Somit kann die Haltekrempe besonders einfach geformt werden.

Bei einer Ausgestaltung der Erfindung kann vorgesehen sein, dass die Haltekrempe durch thermoplastische Umformung ausgebildet ist. Von Vorteil ist dabei, dass der Verbindungsschlauch aus einem extrudierten Material gefertigt werden kann. Die Haltekrempe kann in diesem Fall beispielsweise nach einem Ablängen des Verbindungsschlauches ausgeformt werden.

Bei einer Ausgestaltung der Erfindung kann vorgesehen sein, dass die Schlauchaufnahme seitlich geöffnet ist. Somit muss der Verbindungsschlauch nicht eingefädelt werden.

Bei einer Ausgestaltung der Erfindung kann vorgesehen sein, dass die Schlauchaufnahme umlaufend geschlossen ausgebildet ist. Somit kann die Haltekrempe entlang des gesamten Umfangs abgestützt werden.

Erfindungsgemäß ist vorgesehen, dass an der Haltekrempe ein radial wirkender Zuganker ausgebildet ist. Somit ist eine Auszugssicherung bereitstellbar. Dies ist besonders günstig in dem Fall, dass der Verbindungsschlauch durch eine Erwärmung mit fließendem Warmwasser seine Formstabilität teilweise einbüßt oder verliert.

Hierbei kann beispielsweise vorgesehen sein, dass der Zuganker als Nut oder Rippe ausgebildet ist. Somit ist mit einfachen Mitteln ein Formschluss zwischen der Haltekrempe und der Schlauchaufnahme herstellbar. Die Schlauchaufnahme kann beispielsweise mit einer korrespondierenden Form versehen sein, insbesondere an einer Auflagefläche.

Die Nut oder Rippe kann beispielsweise umlaufend ausgebildet sein, um die Haltekrempe allseitig zu halten.

Bei einer Ausgestaltung der Erfindung kann vorgesehen sein, dass die Haltekrempe gegen eine Auflagefläche an der Schlauchaufnahme gepresst ist. Somit ist ein Herausrutschen der Haltekrempe verhinderbar. Besonders günstig ist es hierbei, wenn an der Haltekrempe der bereits beschriebene Zuganker ausgebildet ist. Durch den Anpressdruck kann erreicht werden, dass sich der Formschluss des Zugankers auch bei heißen Wassertemperaturen nicht ungewollt löst.

Bei einer Ausgestaltung der Erfindung kann vorgesehen sein, dass eine, beispielsweise die bereits erwähnte, Auflagefläche an der Schlauchaufnahme korrespondierend zu der Haltekrempe ausgebildet ist. Somit ist ein Formschluss herstellbar.

Hierbei kann beispielsweise vorgesehen sein, dass so ein radial wirkender Gegenzuganker gebildet ist. Durch das Ineinandergreifen von Zuganker und Gegenzuganker kann ein besonders fester Halt der Haltekrempe erreichbar sein.

Dies kann beispielsweise durch einen Formschluss zwischen Schlauchaufnahme und Haltekrempe eingerichtet sein.

Eine einfache Ausgestaltung eines Formschlusses ist durch wenigstens eine, vorzugsweise umlaufende, Rippe gegeben, die in eine Nut eingreift, gegeben. Hierdurch kann eine zusätzliche Abdichtung erreichbar sein.

Die wenigstens eine Rippe kann hierbei beispielsweise an der Auflagefläche und/oder an der Haltekrempe ausgebildet sein.

Bei einer Ausgestaltung der Erfindung kann vorgesehen sein, dass die Schlauchaufnahme eine umlaufende Stützscheibe aufweist, auf der die Haltekrempe aufliegt. Von Vorteil ist dabei, dass unabhängig von der Ausbildung der Funktionseinheit eine allseitige Abstützung der Haltekrempe erreichbar ist, insbesondere dann, wenn die Schlauchaufnahme seitlich geöffnet ist.

Bevorzugt ist die Stützscheibe abnehmbar ausgebildet. Dies kann eine Demontage vereinfachen. Es sind auch unterschiedliche Materialien für die Stützscheibe und für eine die Stützscheibe tragende Trägerplatte wählbar.

Beispielsweise kann vorgesehen sein, dass die Stützscheibe als Stanzteil und/oder Biegeteil ausgebildet ist. Somit kann die Stützscheibe beispielsweise aus Metall gefertigt sein, während die bereits erwähnte Trägerplatte der Funktionseinheit aus Kunststoff fertigbar ist.

Beispielsweise kann vorgesehen sein, dass die Stützscheibe als Druckgussteil, insbesondere als Zinkdruckgussteil, ausgebildet ist. Somit sind alternative Materialien verwendbar.

Alternativ oder zusätzlich kann vorgesehen sein, dass die Stützscheibe als Kunststoffteil ausgebildet ist. Dieses kann beispielsweise thermoplastisch sein, um eine einfache Herstellung zu erlauben.

Alternativ oder zusätzlich kann vorgesehen sein, dass an einer, insbesondere der bereits beschriebenen, Auflagefläche für die Haltekrempe scharfkantige Strukturen ausgebildet sind. Diese scharfkantigen Strukturen können sich in die Haltekrempe eingraben, um diese formschlüssig zu halten. Dies ist besonders einfach erreichbar, wenn die Stützscheibe ein - beispielsweise metallisches - Stanzteil und/oder Biegeteil und/oder Druckgussteil, insbesondere Zinkdruckgussteil, ist.

Hierbei können die scharfkantigen Strukturen beispielsweise wenigstens eine Haltekralle aufweisen. Somit sind besonders einfach fertigbare Strukturen beschrieben.

Bei einer Ausgestaltung der Erfindung kann vorgesehen sein, dass an dem Ende des Verbindungsschlauchs eine Dichtfläche ausgebildet ist. Von Vorteil ist dabei, dass eine Dichtfunktion in die Haltekrempe integrierbar ist. Weitere Dichtmittel sind verzichtbar. Der Verbindungschlauch kann somit aus einer einzigen Komponente gefertigt sein, da ein Dichtring oder ein sonstiges Dichtmittel an der Funktionseinheit bereitstellbar ist.

Die Dichtfläche kann hierbei beispielsweise umlaufend ausgebildet sein. Somit ist eine allseitige Abdichtung erreichbar.

Es kann vorgesehen sein, dass die Dichtfläche axial wirkt. Somit ist ein Anpressdruck, insbesondere der zuvor beschriebene Anpressdruck, auf die Haltekrempe für eine Abdichtung nutzbar.

Alternativ oder zusätzlich kann vorgesehen sein, dass die Dichtfläche radial wirkt. Somit ist eine Anordnung beschrieben, deren Dichtwirkung unabhängig von einem Anpressdruck auf die Haltekrempe ist.

Bei einer Ausgestaltung der Erfindung kann vorgesehen sein, dass eine axial wirkende Dichtfläche an einer Zuströmseite der Haltekrempe ausgebildet ist. Somit ist ein Dichtring einfach aufsetzbar.

Hierbei kann vorgesehen sein, dass am Ventil eine axial wirkende Gegendichtfläche ausgebildet ist. Diese kann beispielsweise durch einen eingesetzten Dichtring bereitstellbar sein.

Bei einer Ausgestaltung der Erfindung kann vorgesehen sein, dass eine radial wirkende Dichtfläche an einem Stutzen, der an der Zuströmseite über die Haltekrempe übersteht, ausgebildet ist. Somit ist eine einfach, insbesondere durch thermoplastisches Umformen, fertigbare Radialdichtung ausbildbar.

Hierbei kann vorgesehen sein, dass am Ventil eine radial wirkende Gegendichtfläche ausgebildet ist. Von Vorteil ist dabei, dass ein Anpressdruck des Ventils zur Ausbildung einer Abdichtung einsetzbar ist. Auch hier kann die Gegendichtfläche an einem Dichtring ausgebildet sein.

Bei einer Ausgestaltung der Erfindung kann vorgesehen sein, dass ein umlaufender Rand einer Eintrittsöffnung am Ende des Verbindungsschlauchs eine scharfkantige Kante aufweist. Dies ermöglicht eine nutfreie Gestaltung eines Übergangs zwischen dem Verbindungsschlauch und der Funktionseinheit. Derartige Nuten können eine Verwirbelung des strömenden Wassers bewirken und somit ungewollt einen lichten effektiven Querschnitt am Übergang verringern.

Beispielsweise kann vorgesehen sein, dass die scharfkantige Kante mit einem radienfreien Werkzeug ausgebildet ist. Somit ist - insbesondere beim thermoplastischen Umformen - ein einfaches Werkzeug zur Erlangung eines möglichst glatten Übergangs einsetzbar.

Alternativ oder zusätzlich kann vorgesehen sein, dass der umlaufende Rand an das Ventil bündig anschließend ausgebildet ist. Hierdurch lassen sich Querschnittsverengungen der Strömung und/oder eine Erhöhung eines Strömungswiderstandes häufig vermeiden. Die Vermeidung von Unebenheiten am Übergang reduziert auch die Möglichkeiten zur Schmutzablagerung in diesem Bereich.

Bei einer Ausgestaltung der Erfindung kann vorgesehen sein, dass die Funktionseinheit eine Mischkartusche ist. Somit ist ein häufiger Anwendungsfall abdeckbar.

Bei einer Ausgestaltung der Erfindung kann vorgesehen sein, dass der Verbindungsschlauch ein Mischwasserschlauch ist. Die Erfindung macht sich hierbei zunutze, dass der Mischwasserschlauch häufig einem geringen Betriebsdruck ausgesetzt ist und dass damit eine Belastung der fluidischen Verbindung an der Haltekrempe reduziert werden kann.

Bei einer bevorzugten Anwendung wird zur Lösung der genannten Aufgabe eine Sanitärarmatur mit einer erfindungsgemäßen wasserführenden Anordnung, insbesondere wie zuvor beschrieben und/oder nach einem der auf eine wasserführende Anordnung gerichteten Ansprüche, vorgeschlagen.

Hierbei kann beispielsweise vorgesehen sein, dass der Verbindungsschlauch als Ablaufschlauch zu einem Wasserauslass der Sanitärarmatur geführt ist. Somit ist erreichbar, dass sich ein Betriebsdruck von einem Umgebungsdruck nur geringfügig unterscheidet, wenn ein Druckabfall über dem Wasserauslass gering ist. Dies vereinfacht die Anforderungen an eine dauerfeste Dichtigkeit an der Haltekrempe.

Alternativ oder zusätzlich kann hierbei vorgesehen sein, dass wenigstens ein Zulaufschlauch der Funktionseinheit, insbesondere des Ventils, einen Schlauchnippel aufweist. Somit ist eine druckfeste Verbindung mit Schlauchnippel an der Funktionseinheit mit dem beschriebenen Anschluss über eine Haltekrempe beispielsweise auf der Ablaufseite kombinierbar.

Die Erfindung wird im Folgenden anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt:
- Fig. 1: eine Sanitärarmatur mit einer erfindungsgemäßen wasserführenden Anordnung in teilweise aufgeschnittener Darstellung,
- Fig. 2: ein Detail aus Figur 1,
- Fig. 3: die Funktionseinheit mit Verbindungsschläuchen aus Figur 1 in teilweise demontiertem Zustand,
- Fig. 4: einen Verbindungsschlauch der wasserführenden Anordnung gemäß Figur 1 in einer Schrägansicht von oben zur Illustration des Montagevorgangs,
- Fig. 5: eine Schnittdarstellung durch einen Verbindungsschlauch der wasserführenden Anordnung gemäß Figur 1 in einer Axialschnittdarstellung,
- Fig. 6: ein Detail aus Figur 5,
- Fig. 7: eine Variante eines Verbindungsschlauchs analog zu der Darstellung gemäß Figur 5,
- Fig. 8: eine Detaildarstellung aus Figur 7,
- Fig. 9: eine Ansicht auf eine Zuströmseite einer Trägerplatte der wasserführenden Anordnung gemäß Figur 1 zur Erläuterung der Lage des Schnitts in Figur 5,
- Fig. 10: eine Variante einer Trägerplatte analog zu Figur 9,
- Fig. 11: die Verwendung eines Verbindungsschlauchs mit Haltekrempe an einer Trägerplatte gemäß Figur 10,
- Fig. 12: eine Ansicht analog zu Figur 11 schräg von unten auf eine Abströmseite der Trägerplatte,
- Fig. 13: eine Axialschnittdarstellung analog zu Figur 5 einer weiteren Variante eines Verbindungsschlauchs mit Haltekrempe und Stützscheibe,
- Fig. 14: eine Detaildarstellung aus Figur 13,
- Fig. 15: eine Ansicht auf die Zuströmseite einer Stützscheibe aus Figur 13,
- Fig. 16: eine Axialschnittdarstellung der Stützscheibe gemäß Figur 15,
- Fig. 17: eine dreidimensionale Schrägdarstellung zur Erläuterung der Montage einer Anordnung gemäß Figur 13,
- Fig. 18: eine Ansicht auf die Abströmseite der Trägerplatte aus Figur 17,
- Fig. 19: eine Axialschnittdarstellung analog zu Figur 5 einer weiteren Variante eines Verbindungsschlauchs mit Haltekrempe und
- Fig. 20: eine Teildarstellung aus Figur 19.

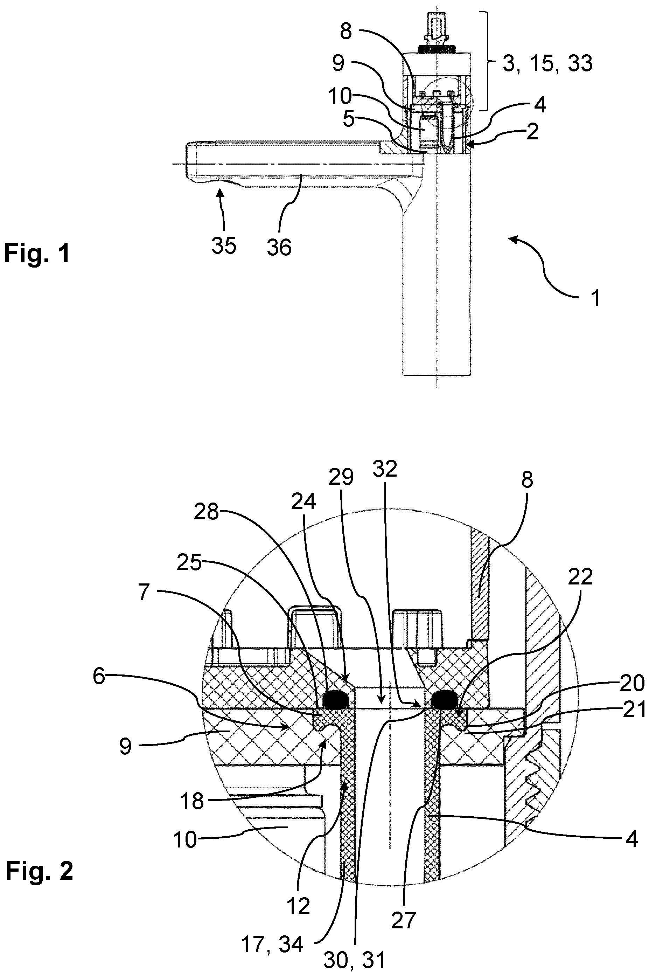

Die Figuren 1 bis 6 und 9 zeigen ein erstes Ausführungsbeispiel und werden im Folgenden gemeinsam beschrieben.

Eine im Ganzen mit 1 bezeichnete Sanitärarmatur hat eine wasserführende Anordnung 2. Diese wasserführende Anordnung 2 umfasst zumindest eine sanitäre Funktionseinheit 3, einen Verbindungsschlauch 4 und weitere Verbindungsschläuche 5.

Die Funktionseinheit 3 hat zwei Eingänge und einen Ausgang, wobei die weiteren Verbindungsschläuche 5 an die Eingänge und der Verbindungsschlauch 4 an den Ausgang angeschlossen sind.

An einem der Funktionseinheit 3 zugewandten Ende 6 des Verbindungsschlauchs 4 ist eine Haltekrempe 7 ausgebildet.

Die Funktionseinheit 3 weist einen Funktionskörper 8 und eine Trägerplatte 9 auf.

Die weiteren Verbindungsschläuche 5 weisen in an sich bekannter Weise jeweils ein Anschlussstück 10 auf, welches einen Schlauchnippel 13 und eine Crimphülse 14 umfasst. Die Anschlussstücke 10 sind in an sich bekannter Weise an der Trägerplatte 9 in Schlauchaufnahmen 11 eingehängt.

Die Haltekrempe 7 des Verbindungsschlauchs 4 ist ohne einen separaten Anschluss direkt in eine Schlauchaufnahme 12 an der Trägerplatte 9 eingehängt.

Die Haltekrempe 7 ist hierbei aus demselben Material gefertigt wie der Verbindungsschlauch 4 und ist einstückig an dem Verbindungsschlauch 4 ausgeformt.

Der Verbindungsschlauch 4 besteht aus einem thermoplastischen Material, das vor der Montage entsprechend abgelängt wurde. Die Haltekrempe 7 ist an dem Verbindungsschlauch 4 mit Hilfe eines erhitzten Werkzeugstempels thermoplastisch aus dem Schlauchmaterial geformt worden, so dass das Schlauchmaterial zur Bildung der Haltekrempe 7 aufgeworfen wurde.

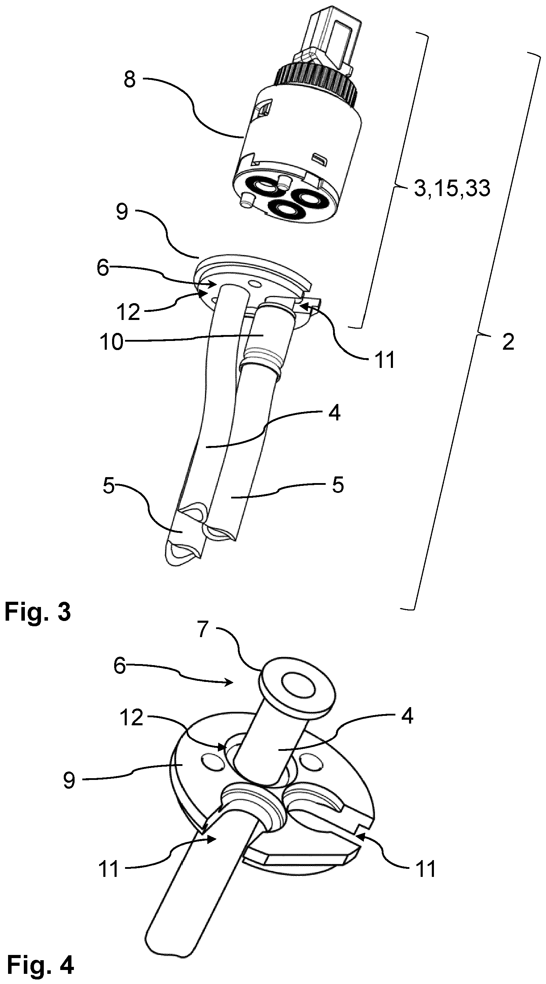

In Figur 4 ist ersichtlich, dass die Schlauchaufnahme 12 umlaufend geschlossen ausgebildet ist, so dass der Verbindungsschlauch 4 bei der Montage durch die Schlauchaufnahme 12 eingefädelt und bis zur Haltekrempe 7 durchgezogen werden muss.

Bei dem gezeigten Ausführungsbeispiel ist die Funktionseinheit 3 als Ventil 15 ausgebildet, welches mit einem von außen zugänglichen Betätigungselement 16 betätigbar ist, um den Fluss von den weiteren Verbindungsschläuchen 5 in den Verbindungsschlauch 4 zu steuern.

Der Verbindungsschlauch 4 ist somit als Ablaufschlauch 17 ausgestaltet, der auf der Niederdruckseite der Funktionseinheit 3 in der beschriebenen Weise mit einer Haltekrempe 7 angeschlossen ist.

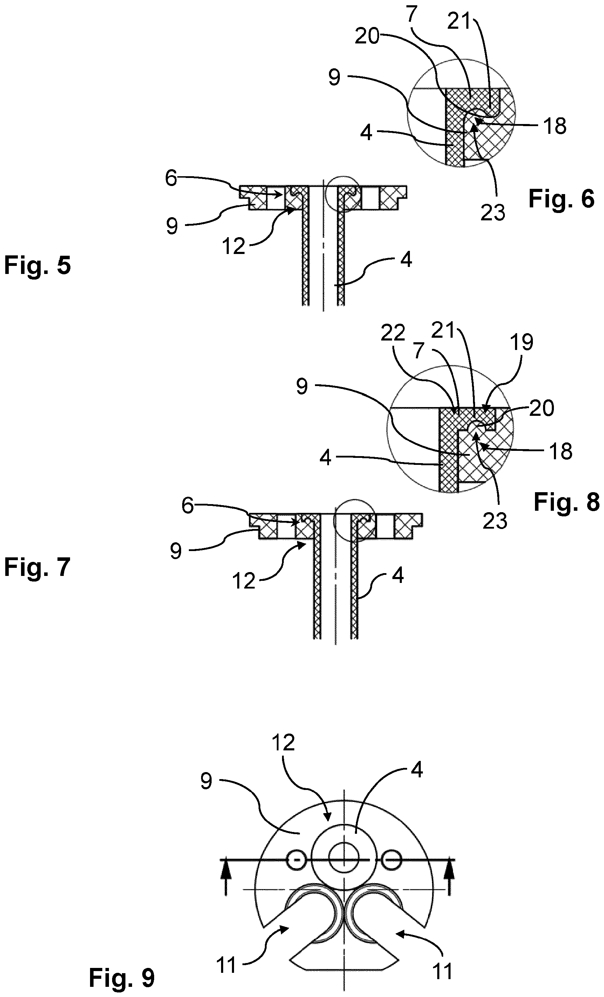

In den Figuren 5 und 6 ist ersichtlich, dass die Unterseite 18 der Haltekrempe 7 nicht plan ausgebildet ist, sondern eine Struktur aufweist.

Durch diese Struktur ist ein Zuganker 19 ausgebildet, welcher in radialer Richtung wirkt und verhindert, dass die Haltekrempe 7 durch die Schlauchaufnahme 12 gezogen wird. Diese Gefahr kann beispielsweise bestehen, wenn der Verbindungsschlauch 4 durch heißes, in ihm fließendes Wasser so weit erwärmt wird, dass die Formstabilität deutlich nachlässt oder nicht mehr gegeben ist.

Der erwähnte Zuganker 19 ist im Ausführungsbeispiel durch eine Rippe 20 an der Unterseite 18 gebildet, die in eine korrespondierende Nut 21 an einer Auflagefläche 22 für die Haltekrempe 7 an der Trägerplatte 9 eingreift.

Die Nut 21 bildet somit einen Gegenzuganker 23, der eine radiale Sicherung und Fixierung der Haltekrempe 7 im Wechselspiel mit dem Zuganker 19 bewirkt.

An einer Oberseite 24 der Haltekrempe 7 ist eine Dichtfläche 25 ausgebildet, die eine axiale Abdichtung ermöglicht.

Da in diesem Ausführungsbeispiel der Verbindungsschlauch 4 als Ablaufschlauch 17 ausgebildet und verwendet ist, ist die Oberseite 24 die Zuströmseite 26.

An dem Funktionskörper 8 ist eine passende Gegendichtfläche 27 mit einem axial abdichtenden Dichtring 28 ausgebildet. In Gebrauchsstellung ist der Funktionskörper 8 gegen die Trägerplatte 9 gepresst, so dass einerseits der Zuganker 19 und der Gegenzuganker 23 in Wirkposition gehalten werden und andererseits der Dichtring 28 gegen die Dichtfläche 25 verpresst wird, um die Abdichtung zu bewirken.

In der Detaildarstellung nach Figur 2 ist noch ersichtlich, dass am Ende 6 eine Eintrittsöffnung 29 des Verbindungsschlauchs 4 ausgebildet ist, die einen scharfkantigen Rand 30 oder eine radienfreie Kante 31 aufweist. Hierdurch wird ein glatter Übergang 32 zu dem Funktionskörper 8 geschaffen, ohne dass Unebenheiten in der Wandung der Flüssigkeitsführung zu Verwirbelung führen können.

Bei dem Ventil 15 handelt es sich um eine Mischkartusche 33, wobei der Verbindungsschlauch 4 als Mischwasserschlauch 34 zum Wasserauslass 35 am Ende des Auslaufrohrs 36 geführt ist.

Die Figuren 7 und 8 zeigen eine Variante einer Kombination eines Verbindungsschlauchs 4 mit einer Trägerplatte 9, wie sie statt der Kombination gemäß Figur 5 in der wasserführenden Anordnung 1 gemäß den Figuren 1 bis 4 verbaut sein könnte. Funktionell und/oder konstruktiv zu dem vorangehenden Ausführungsbeispiel baugleiche oder identische Bauteile und Funktionseinheiten sind mit denselben Bezugszeichen bezeichnet und nicht noch einmal besonders beschrieben. Die Ausführungen zu dem vorangehenden Ausführungsbeispiel gelten daher zu den Figuren 7 und 8 entsprechend.

Bei dem Ausführungsbeispiel gemäß den Figuren 7 und 8 sind der Zuganker 19 und der Gegenzuganker 23 durch eine Rippe 20 in der Auflagefläche 22 und einer korrespondierenden Nut 21 an der Unterseite 18 der Haltekrempe 7 ausgebildet.

Bei weiteren Ausführungsbeispielen sind andere Kombinationen von Nuten und Rippen oder sonstigen Mitteln zur Wirkung eines Formschlusses realisiert.

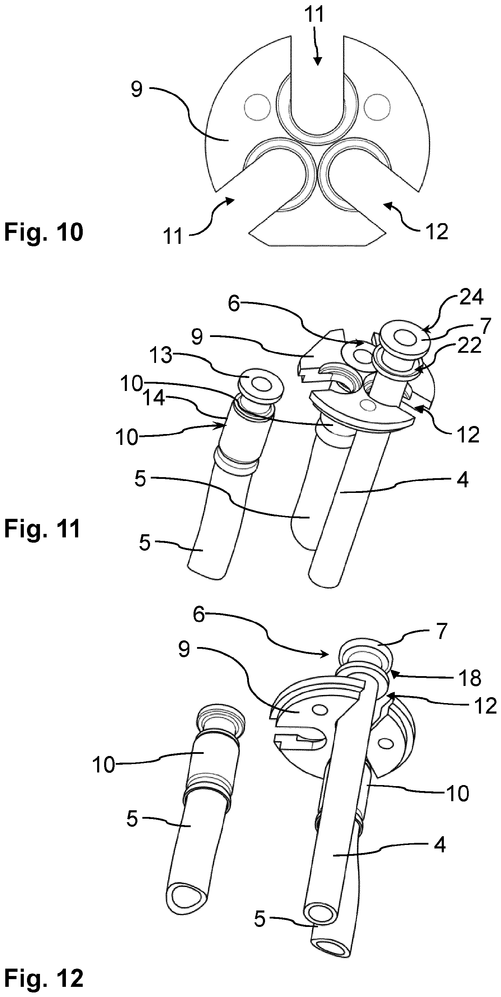

Die Figuren 10 bis 16 zeigen ein weiteres Ausführungsbeispiel Wieder sind konstruktiv und/oder funktionell zu den vorangehenden Ausführungsbeispielen baugleiche oder identische Bauteile und Funktionseinheiten mit denselben Bezugszeichen bezeichnet und nicht noch einmal gesondert beschrieben. Die Ausführungen zu den Figuren 1 bis 9 geltend daher zu den Figuren 10 bis 16 entsprechend.

Das Ausführungsbeispiel gemäß den Figuren 10 bis 16 unterscheidet sich von den vorangehenden Ausführungsbeispielen dadurch, dass die Schlauchaufnahme 12 seitlich geöffnet ist, wie dies bei den Schlauchaufnahmen 11 bereits der Fall war.

Um hier die Haltekrempe 7 allseitig zu fassen, ist in die Schlauchaufnahme 12 eine Stützscheibe 37 gesetzt, welche die Auflagefläche 22 ausbildet.

Die Stützscheibe 37 ist hierbei aus einem nichtthermoplastischen Werkstoff, beispielsweise aus Metall, gefertigt. Im Ausführungsbeispiel ist die Stützscheibe 37 gestanzt oder gebogen.

Bei weiteren Ausführungsbeispielen ist die Stützscheibe 37 aus einem nicht-metallischen Werkstoff, beispielsweise aus einem Kunststoff, gefertigt.

Bei weiteren Ausführungsbeispielen können an der Auflagefläche 22 scharfkantige Strukturen, beispielsweise Haltekrallen, ausgebildet sein, mit denen sich die Stützscheibe 37 in der Haltekrempe 7 verhaken kann.

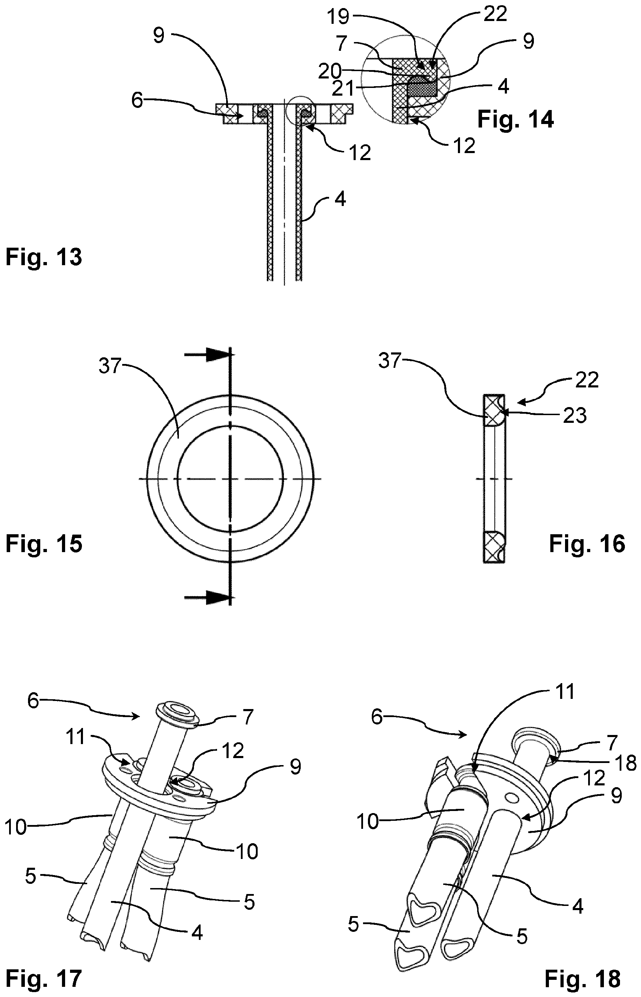

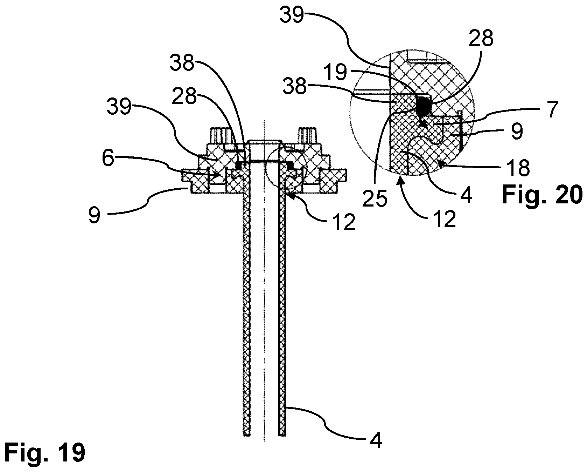

Die Figuren 17 bis 20 zeigen ein weiteres erfindungsgemäßes Ausführungsbeispiel. Wieder sind funktionell und/oder konstruktiv zu den vorangehenden Ausführungsbeispielen gleichartige oder identische Bauteile und Funktionseinheiten mit denselben Funktionseinheiten bezeichnet und nicht noch einmal gesondert beschrieben. Die Ausführungen zu den Figuren 1 bis 16 gelten daher zu den Figuren 17 bis 20 entsprechend.

Das Ausführungsbeispiel gemäß den Figuren 17 bis 20 unterscheidet sich von den vorangehenden Ausführungsbeispielen dadurch, dass am Einströmende 6 keine axial wirkende Dichtfläche 25, sondern ein Stutzen 38 ausgebildet ist. Dieser Stutzen 38 bildet eine radial orientierte Dichtfläche 25, welche in einen Dichtring 28, der in ein Unterteil 39 des Funktionskörpers 8 eingesetzt ist und radial verpresst wird, eingreift.

Bei der wasserführenden Anordnung 1 wird somit erfindungsgemäß vorgeschlagen, an einem Ende 6 des Verbindungsschlauchs 4 eine Haltekrempe 7 einstückig auszuformen, welche eine Schlauchaufnahme 12 hintergreift, um den Verbindungsschlauch 4 einzuhängen.

### Bezugszeichenliste

- 1: Sanitärarmatur
- 2: wasserführende Anordnung
- 3: (sanitäre) Funktionseinheit
- 4: Verbindungsschlauch
- 5: weiterer Verbindungsschlauch
- 6: Ende
- 7: Haltekrempe
- 8: Funktionskörper
- 9: Trägerplatte
- 10: Anschlussstück
- 11: Schlauchaufnahme
- 12: Schlauchaufnahme
- 13: Schlauchnippel
- 14: Crimphülse
- 15: Ventil
- 16: Betätigungselement
- 17: Ablaufschlauch
- 18: Unterseite
- 19: Zuganker
- 20: Rippe
- 21: Nut
- 22: Auflagefläche
- 23: Gegenzuganker
- 24: Oberseite
- 25: Dichtfläche
- 26: Zuströmseite
- 27: Gegendichtfläche
- 28: Dichtring
- 29: Eintrittsöffnung
- 30: Rand
- 31: Kante
- 32: Übergang
- 33: Mischkartusche
- 34: Mischwasserschlauch
- 35: Wasserauslass
- 36: Auslaufrohr
- 37: Stützscheibe
- 38: Stutzen
- 39: Unterteil

## Patentansprüche

1. Zur Wasserführung geeignete Anordnung (2), mit einer Funktionseinheit (3), insbesondere einem Ventil (15), und mindestens einem Verbindungsschlauch (4), insbesondere Zulaufschlauch und/oder Ablaufschlauch (17), wobei an einem der Funktionseinheit (3) zugewandten Ende (6) des Verbindungsschlauches (4) eine angeformte Haltekrempe (7) einstückig ausgebildet ist, und dass die Haltekrempe (7) an einer Schlauchaufnahme (11) der Funktionseinheit (3) eingehängt ist, **dadurch gekennzeichnet, dass** an der Haltekrempe (7) ein radial wirkender Zuganker (19) ausgebildet ist.

2. Zur Wasserführung geeignete Anordnung (2) nach Anspruch 1, **dadurch gekennzeichnet, dass** der Verbindungsschlauch (4) aus einem thermoplastischen Material gefertigt ist und/oder dass die Haltekrempe (7) durch thermoplastische Umformung ausgebildet ist.

3. Zur Wasserführung geeignete Anordnung (2) nach einem der vorangehenden Ansprüche, **dadurch gekennzeichnet, dass** die Schlauchaufnahme (11) seitlich geöffnet ist oder dass die Schlauchaufnahme (11) umlaufend geschlossen ausgebildet ist.

4. Zur Wasserführung geeignete Anordnung (2) nach einem der vorangehenden Ansprüche, **dadurch gekennzeichnet, dass** der Zuganker (19) in Form einer vorzugsweise umlaufenden Nut (21) oder Rippe (20) ausgebildet ist.

5. Zur Wasserführung geeignete Anordnung (2) nach einem der vorangehenden Ansprüche, **dadurch gekennzeichnet, dass** die Haltekrempe (7) gegen eine Auflagefläche (22) an der Schlauchaufnahme (11) gepresst ist.

6. Zur Wasserführung geeignete Anordnung (2) nach einem der vorangehenden Ansprüche, **dadurch gekennzeichnet, dass** die oder eine Auflagefläche (22) an der Schlauchaufnahme (11) korrespondierend zu der Haltekrempe (7) ausgebildet ist, insbesondere so dass ein radial wirkender Gegenzuganker (23) gebildet ist.

7. Zur Wasserführung geeignete Anordnung (2) nach einem der vorangehenden Ansprüche, **dadurch gekennzeichnet, dass** die Schlauchaufnahme (11) eine umlaufende, vorzugsweise abnehmbare, Stützscheibe (37) aufweist, auf der die Haltekrempe (7) aufliegt, insbesondere wobei die Stützscheibe (37) als Stanzteil und/oder Biegeteil und/oder als Druckgussteil, insbesondere Zinkdruckgussteil, und/oder als vorzugsweise thermoplastisches Kunststoffteil ausgebildet ist und/oder an der oder einer Auflagefläche (22) für die Haltekrempe (7) scharfkantige Strukturen, vorzugsweise wenigstens eine Haltekralle, aufweist.

8. Zur Wasserführung geeignete Anordnung (2) nach einem der vorangehenden Ansprüche, **dadurch gekennzeichnet, dass** an dem Ende (6) des Verbindungsschlauchs (4) eine vorzugsweise umlaufende, insbesondere axial und/oder radial wirkende Dichtfläche (25) ausgebildet ist.

9. Zur Wasserführung geeignete Anordnung (2) nach einem der vorangehenden Ansprüche, **dadurch gekennzeichnet, dass** eine axial wirkende Dichtfläche (25) an einer Zuströmseite (26) der Haltekrempe (7) ausgebildet ist, insbesondere wobei am Ventil (15) eine axial wirkende Gegendichtfläche (27) ausgebildet ist.

10. Zur Wasserführung geeignete Anordnung (2) nach einem der vorangehenden Ansprüche, **dadurch gekennzeichnet, dass** eine radial wirkende Dichtfläche (25) an einem Stutzen (38), der an der Zuströmseite (26) über die Haltekrempe (7) übersteht, ausgebildet ist, insbesondere wobei am Ventil (15) eine radial wirkende Gegendichtfläche (27) ausgebildet ist.

11. Zur Wasserführung geeignete Anordnung (2) nach einem der vorangehenden Ansprüche, **dadurch gekennzeichnet, dass** ein umlaufender Rand (30) einer Eintrittsöffnung (29) am Ende (6) des Verbindungsschlauchs (4) eine scharfkantige Kante (31) aufweist.

12. Zur Wasserführung geeignete Anordnung (2) nach einem der vorangehenden Ansprüche, **dadurch gekennzeichnet, dass** die Funktionseinheit (3) ein Ventil (15) ist.

13. Zur Wasserführung geeignete Anordnung (2) nach vorangehenden Anspruch, **dadurch gekennzeichnet, dass** das Ventil (15) eine Mischkartusche (33) ist.

14. Zur Wasserführung geeignete Anordnung (2) nach einem der vorherigen Ansprüche, **dadurch gekennzeichnet, dass** der Verbindungsschlauch (4) ein Mischwasserschlauch (34) ist.

15. Sanitärarmatur (1) mit einer zur Wasserführung geeigneten Anordnung (2) nach einem der vorangehenden Ansprüche, insbesondere wobei der Verbindungsschlauch (4) als Ablaufschlauch (17) zu einem Wasserauslass (35) der Sanitärarmatur (1) geführt ist und/oder wenigstens ein Zulaufschlauch der Funktionseinheit (3), insbesondere des Ventils (15), einen Schlauchnippel (13) aufweist.

## Claims

1. Arrangement (2) suitable for conducting water, having a functional unit (3), in particular a valve (15), and at least one connecting hose (4), in particular a supply hose and/or a discharge hose (17), wherein a holding rim (7) is integrally formed in one piece on one end (6) of the connecting hose (4) facing the functional unit (3), and that the holding rim (7) is suspended on a hose receiver (11) of the functional unit (3), **characterized in that** a radially acting tension rod (19) is formed on the holding rim (7).

2. Arrangement (2) suitable for conducting water according to claim 1, **characterized in that** the connecting hose (4) is made of a thermoplastic material and/or **in that** the holding rim (7) is formed by thermoplastic molding.

3. Arrangement (2) suitable for conducting water according to one of the preceding claims, **characterized in that** the hose receiver (11) is laterally open or **in that** the hose receiver (11) is designed to be closed all around.

4. Arrangement (2) suitable for conducting water according to one of the preceding claims, **characterized in that** the tension rod (19) is designed in the form of a preferably encircling groove (21) or rib (20).

5. Arrangement (2) suitable for conducting water according to one of the preceding claims, **characterized in that** the holding rim (7) is pressed against a bearing surface (22) on the hose receiver (11).

6. Arrangement (2) suitable for conducting water according to one of the preceding claims, **characterized in that** the or a bearing surface (22) on the hose receiver (11) is designed to correspond to the holding rim (7), in particular so that a radially acting counter-tension rod (23) is formed.

7. Arrangement (2) suitable for conducting water according to one of the preceding claims, **characterized in that** the hose receiver (11) has a peripheral, preferably removable, supporting disc (37) on which the holding rim (7) rests, in particular wherein the supporting disc (37) is formed as a punched part and/or bent part and/or as a diecast part, in particular a zinc diecast part, and/or as a preferably thermoplastic synthetic material part and/or having sharp-edged structures, preferably at least one holding claw, on the or a bearing surface (22) for the holding rim (7).

8. Arrangement (2) suitable for conducting water according to one of the preceding claims, **characterized in that** a preferably circumferential, in particular axially and/or radially acting sealing surface (25) is formed at the end (6) of the connecting hose (4).

9. Arrangement (2) suitable for conducting water according to one of the preceding claims, **characterized in that** an axially acting sealing surface (25) is formed on an inflow side (26) of the holding rim (7), in particular wherein an axially acting counter-sealing surface (27) is formed on the valve (15).

10. Arrangement (2) suitable for conducting water according to one of the preceding claims, **characterized in that** a radially acting sealing surface (25) is formed on a connecting piece (38) which projects beyond the holding rim (7) on the inflow side (26), in particular wherein a radially acting counter-sealing surface (27) is formed on the valve (15).

11. Arrangement (2) suitable for conducting water according to one of the preceding claims, **characterized in that** a circumferential rim (30) of an inlet opening (29) at the end (6) of the connecting hose (4) has a sharp-edged edge (31).

12. Arrangement (2) suitable for conducting water according to one of the preceding claims, **characterized in that** the functional unit (3) is a valve (15).

13. Arrangement (2) suitable for conducting water according to the preceding claim, **characterized in that** the valve (15) is a mixing cartridge (33).

14. Arrangement (2) suitable for conducting water according to one of the preceding claims, **characterized in that** the connecting hose (4) is a mixed-water hose (34).

15. Plumbing fixture (1) having an arrangement (2) suitable for conducting water according to one of the preceding claims, in particular wherein the connecting hose (4) is routed as a discharge hose (17) to a water outlet (35) of the plumbing fixture (1) and/or at least one inlet hose of the functional unit (3), in particular of the valve (15), has a hose nipple (13).

## Revendications

1. Dispositif (2) convenant pour l'acheminement d'eau, avec une unité fonctionnelle (3), en particulier un robinet (15), et avec au moins un tuyau de raccordement (4), en particulier un tuyau d'arrivée et/ou d'évacuation (17), dans lequel un rebord de maintien moulé (7) est formé d'un seul tenant à une extrémité (6) du tuyau de raccordement (4) orientée vers l'unité fonctionnelle et dans laquelle le rebord de maintien (7) est suspendu à un logement de tuyau (11) de l'unité fonctionnelle (3), **caractérisé en ce qu'**un tirant d'ancrage (19) agissant dans le sens radial est formé sur le rebord de maintien (7).

2. Dispositif (2) convenant pour l'acheminement d'eau selon la revendication 1, **caractérisé en ce que** le tuyau de raccordement (4) est fait d'une matière thermoplastique et/ou **en ce que** le rebord de maintien (7) est formé par formage thermoplastique.

3. Dispositif (2) convenant pour l'acheminement d'eau selon l'une des revendications précédentes, **caractérisé en ce que** le logement de tuyau (11) est ouvert sur le côté ou **en ce que** le logement de tuyau (11) est fermé sur toute sa circonférence.

4. Dispositif (2) convenant pour l'acheminement d'eau selon l'une des revendications précédentes, **caractérisé en ce que** le tirant d'ancrage (19) est conformé comme une gorge (21) ou une nervure (20), de préférence circonférentielle.

5. Dispositif (2) convenant pour l'acheminement d'eau selon l'une des revendications précédentes, **caractérisé en ce que** le rebord de maintien (7) est pressé contre une surface d'appui (22) sur le logement de tuyau (11).

6. Dispositif (2) convenant pour l'acheminement d'eau selon l'une des revendications précédentes, **caractérisé en ce que** la ou une surface d'appui (22) sur le logement de tuyau (11) est formée en correspondance avec le rebord de maintien (7), en particulier de manière à former un contre-tirant d'ancrage (23) agissant dans le sens radial.

7. Dispositif (2) convenant pour l'acheminement d'eau selon l'une des revendications précédentes, **caractérisé en ce que** le logement de tuyau (11) présente un disque d'appui (37) circonférentiel, de préférence amovible, sur lequel repose le rebord de maintien (7), lequel disque d'appui (37) est conformé comme une pièce découpée à l'emporte-pièce et/ou une pièce pliée et/ou une pièce moulée par injection, en particulier une pièce moulée par injection en zinc, et/ou comme une pièce de préférence en matière thermoplastique et/ou présente sur la ou une surface d'appui (22) pour le rebord de maintien (7) des structures à arêtes vives, de préférence au moins une griffe de maintien.

8. Dispositif (2) convenant pour l'acheminement d'eau selon l'une des revendications précédentes, **caractérisé en ce qu'**une surface d'étanchéité (25) de préférence circonférentielle, agissant dans le sens en particulier axial et/ou radial, est formée à l'extrémité (6) du tuyau de raccordement (4).

9. Dispositif (2) convenant pour l'acheminement d'eau selon l'une des revendications précédentes, **caractérisé en ce qu'**une surface d'étanchéité (25) agissant dans le sens axial est formée sur un côté d'arrivée (26) du rebord de maintien (7), une contre-surface d'étanchéité (27) agissant dans le sens axial étant en particulier formée sur le robinet (15).

10. Dispositif (2) convenant pour l'acheminement d'eau selon l'une des revendications précédentes, **caractérisé en ce qu'**une surface d'étanchéité (25) agissant dans le sens radial est formée sur un raccord (38) qui dépasse sur le côté d'arrivée (26) au-delà du rebord de maintien (7), une contre-surface d'étanchéité (27) agissant dans le sens radial étant en particulier formée sur le robinet (15).

11. Dispositif (2) convenant pour l'acheminement d'eau selon l'une des revendications précédentes, **caractérisé en ce qu'**un bord continu (30) d'une ouverture d'entrée (29) à l'extrémité (6) du tuyau de raccordement (4) comporte un bord à arêtes vives (31).

12. Dispositif (2) convenant pour l'acheminement d'eau selon l'une des revendications précédentes, **caractérisé en ce que** l'unité fonctionnelle (3) est un robinet (15).

13. Dispositif (2) convenant pour l'acheminement d'eau selon la revendication précédente, **caractérisé en ce que** le robinet (15) est une cartouche de mitigeur (33).

14. Dispositif (2) convenant pour l'acheminement d'eau selon l'une des revendications précédentes, **caractérisé en ce que** le tuyau de raccordement (4) est un tuyau d'eau mitigée (34).

15. Robinetterie sanitaire (1) munie d'un dispositif (2) convenant pour l'acheminement d'eau selon l'une des revendications précédentes, en particulier dans laquelle le tuyau de raccordement (4) est posé comme un tuyau d'évacuation (17) vers l'écoulement d'eau (35) de la robinetterie sanitaire (1) et/ou au moins un tuyau d'arrivée de l'unité fonctionnelle (3), en particulier du robinet (15), présente un piquage de tuyau (13).
